(19) Europäisches Patentamt
European Patent Office
Office européen des brevets

(11) **EP 2 489 430 A1**

(12) **EUROPÄISCHE PATENTANMELDUNG**

(43) Veröffentlichungstag:
**22.08.2012 Patentblatt 2012/34**

(51) Int Cl.:
***B01J 23/42*** *(2006.01)* ***B01J 31/02*** *(2006.01)*

(21) Anmeldenummer: **11005067.1**

(22) Anmeldetag: **22.06.2011**

(84) Benannte Vertragsstaaten:
**AL AT BE BG CH CY CZ DE DK EE ES FI FR GB GR HR HU IE IS IT LI LT LU LV MC MK MT NL NO PL PT RO RS SE SI SK SM TR**
Benannte Erstreckungsstaaten:
**BA ME**

(30) Priorität: **17.02.2011 RU 2011105757**

(71) Anmelder:
- **Shepelin, Vladimir**
  **Moscow 105215 (RU)**
- **Koshmanov, Dmitrij**
  **Moscow 115598 (RU)**

(72) Erfinder:
- **Shepelin, Vladimir**
  **Moscow 105215 (RU)**
- **Koshmanov, Dmitrij**
  **Moscow 115598 (RU)**

(74) Vertreter: **Jeck, Anton**
**Klingengasse 2/1**
**71665 Vaihingen/Enz (DE)**

(54) **Verfahren mit einem beschleunigten Prozessablauf zur Zubereitung eines Katalysators für eine Rekombination von Wasserstoff und Sauerstoff in geschlossenen Räumen**

(57) Die Erfindung bezieht sich auf das Gebiet der Wasserstoffsicherheit. Sie kann zur Vorbeugung von brand- und explosionsgefährdeten Situationen angewendet werden. Das betrifft vor allem Räumlichkeiten, in denen solche Situationen infolge von Wasserstoffleckagen evtl. entstehen können, z. B. in den Räumen von Atomkraftwerken. Die erreichbaren Ergebnisse der Erfindung sind eine Beschleunigung und eine Vereinfachung der Technologie, eine Verbesserung der Arbeitseigenschaften des Katalysators und eine Verminderung der verfahrenstechnischen Verluste des katalytisch aktiven Edelmetalls. Das wird dadurch sichergestellt, dass als chemisches Reduktionsmittel gemäß der Erfindung Hydroxiäthyl-Alkylphenol mit folgendem Gefüge

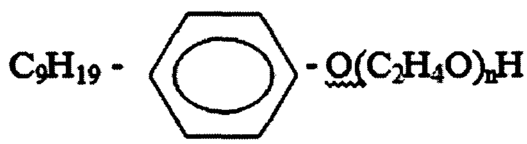

und n angeschlossenen Molen von Epoxiäthan $C_2H_4O$, mit n = 1...10 eingesetzt werden. Das Reduktionsmittel wird unmittelbar in die Salzlösung des katalytisch aktiven Metalls eingearbeitet. Dabei wird empfohlen, als poröse Träger des Katalysators Platten aus porösem Metall zu verwenden, die nach dem Verfahren der Sintermetallurgie hergestellt werden und eine spezifische Oberfläche von 0,05...1,5 $m^2/g$ haben. Beim Einsatz dieses Metalls entfällt eine Hydrophobierung des Katalysators.

EP 2 489 430 A1

## Beschreibung

Die Erfindung betrifft ein Verfahren mit einem beschleunigten Prozessablauf zur Zubereitung eines Katalysators für eine Rekombination von Wasserstoff und Sauerstoff in geschlossenen Räumen nach dem Oberbegriff des Anspruchs 1.

Die Erfindung bezieht sich auf das Gebiet der Wasserstoffsicherheit. Sie kann zur Vorbeugung von brand- und explosionsgefährdeten Situationen angewendet-werden. Das betrifft vor allem Räumlichkeiten, in denen solche Situationen infolge Wasserstoffleckagen evtl. entstehen können, z. B. in den Räumen von Atomkraftwerken.

Die Vorbeugung von einer explosionsgefährdeten Situation wird normalerweise mittels der Durchführung einer katalytischen Rekombination von Wasserstoff und Sauerstoff nach der chemischen Reaktionsgleichung $H_2 + ½\ O_2 \rightarrow H_2O$ (Dampf) + 244,05 kJ erreicht.

Der Katalysator wird in den unteren Teil der Rekombinationsanlage gesetzt. Die Rekombinationsanlage stellt ein senkrecht angeordnetes Rohr dar. Der Wasserstoff kommt in den geschlossenen Raum. Der selbstunterstützende (passive) Arbeitsablauf der Rekombinationsanlage in der Luft dieses geschlossenen Raums ist dadurch bedingt, dass der Katalysator infolge seiner Arbeit Wärme abgibt und dass damit ein Konvektionssteigstrom in der Rekombinationsanlage erzeugt wird.

Das verbreiteste Verfahren zur Zubereitung eines Katalysators für eine Rekombination von Wasserstoff und Sauerstoff umfasst folgende Verfahrensschritte: folgerichtige Durchtränkung eines porösen Trägers (aus Keramik oder Metall) zuerst mit einer Salzlösung eines Katalysatormetalls (Platin oder anderer Metalle der Platingruppe) und dann mit einem flüssigen chemischen Reduktionsmittel. Danach folgt ein Verbacken, bis ein Niederschlag des katalytisch aktiven Metalls entsteht. Dieser Niederschlag ist dispersweise in den Poren des Trägers verteilt. Der poröse Träger kann auch als mechanischer Träger für den Katalysator dienen, oder er kann auf ein anderes Substrat aufgetragen werden, z. B. auf Edelstahlplatten.

Der Vorgang des Auftragens von Katalysatormetall auf den porösen Träger ist der längste und der komplizierteste Verfahrensvorgang.

Aus dem Stand der Technik (s. RU 2361663, B01J23/40, 2008, der nächste Stand der Technik) ist ein Verfahren zur Zubereitung eines Katalysators zur Rekombination von Wasserstoff und Sauerstoff bekannt. Das Verfahren besteht im Folgenden: Der poröse Träger des Katalysators wird mit einer Salzlösung eines katalytisch aktiven Metalls und mit einem flüssigen chemischen Reduktionsmittel durchtränkt. Nach der Trocknung erfolgt eine Verbackung bis zur Reduktion des katalytisch aktiven Metalls im dispersen Zustand.

Der Mangel dieses Verfahrens ist eine relativ lange Dauer der Prozessführung. Der Träger (die Unterlage) ist normalerweise Aluminiumoxid mit einer spezifischen Oberfläche von 100 - 150 $m^2/g$ oder ein poröses Metall mit einer spezifischen Oberfläche von 0,05 - 1,50 $m^2/g$. Der Träger wird nach dem Verfahren der Sintermetallurgie hergestellt. Dieser Träger wird 1 Stunde lang mit einer Lösung einer Platinmetallverbindung durchtränkt. Das kann insbesondere Platin-Chlorwasserstoffsäure (chloroplatinic acid) sein. Dabei wird der Träger mittels eines Schüttlers in schwingende Bewegungen versetzt, um die Sorption der Platin-Chlorwasserstoffsäure zu verbessern. Danach wird der Träger ein wenig abgetrocknet und zweimal zwecks chemischer Reduktion benetzt. Gleichzeitig erfolgt eine Hydrophobierung mittels einer Lösung einer stabilisierten Aufschwemmung eines Reduktionsmittels und eines Fluoroplastpulvers mit einer Zwischentrocknung bei 100° C. Letztendlich erfolgt die Verbackung bei 300° C. Der gesamte verfahrenstechnische Zyklus der Zubereitung des Katalysators dauert 1,8 bis 2,0 Stunden.

Neben der Dauer zählt der unbedingte Einsatz eines Vermischungsschüttlers zu den Mängeln dieses Standes der Technik. Außerdem können Verluste von Platin-Chlorwasserstoffsäure infolge der Benetzung in der Aufschwemmung des chemischen Reduktionsmittels mit Hydrophobiermittel nicht vermieden werden.

Es ist Aufgabe der Erfindung, die Technologie zu beschleunigen und zu vereinfachen, die Arbeitseigenschaften des Katalysators zu verbessern und die verfahrenstechnischen Verluste des katalytisch aktiven Edelmetalls zu vermindern.

Die gestellte Aufgabe wird durch die Merkmale des Anspruchs 1 gelöst.

Das wird folgenderweise sichergestellt. Das Verfahren zur Zubereitung eines Katalysators für die Rekombination von Wasserstoff und Sauerstoff besteht aus folgenden Vorgängen: Ein poröser Träger des Katalysators wird mit einer Salzlösung eines katalytisch aktiven Metalls und einem flüssigen chemischen Reduktionsmittel durchtränkt. Nach der Abtrocknung wird der Träger bis zur Reduktion des katalytisch aktiven Metalls im dispersen Zustand verbacken. Gemäß der Erfindung wird als chemisches Reduktionsmittel Hydroxiäthyl- Alkylphenol mit folgendem Gefüge

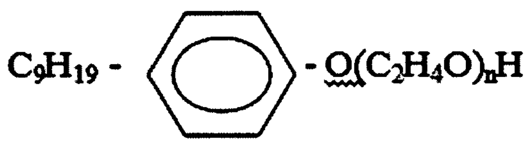

und n angeschlossenen Molen von Epoxiäthan $C_2H_4O$, mit n = 1...10 eingesetzt. Es wird unmittelbar in die Salzlösung des katalytisch aktiven Metalls eingearbeitet.

Als Salz des katalytisch aktiven Metalls wird vorzugsweise Platin-Chlorwasserstoffsäure und als chemisches Reduktionsmittel Hydroxiäthyl-Isooktylphenol eingesetzt, welches n = 7 entspricht.

Die Konzentration C des Salzes des katalytisch aktiven Metalls in der Lösung zur Durchtränkung des Katalysatorträgers wird vorzugsweise auf der Grundlage eines Verhältnisses C = 5,12·(m/v) festgelegt,
wobei

m - der vorgegebene Anteil des katalytisch aktiven Metalls pro Flächeneinheit der geometrischen Trägeroberfläche und

v - der Porenumfang des Trägers pro Flächeneinheit der geometrischen Trägeroberfläche

sind.

Als poröse Träger für den Katalysator werden vorzugsweise solche Metalle gewählt, die mittels Pulvermetallurgie hergestellt werden und eine spezifische Oberfläche von 0,05...1,5 $m^2$/g aufweisen.

Der Katalysator kann ggf. nach einem der bekannten Verfahren hydrophobiert werden.

Damit wird die Tränklösung für das Einbringen des katalytisch aktiven Metalls in die Poren des Katalysatorträgers benutzt. Die Tränklösung enthält sowohl eine Verbindung des Katalysatormetalls als auch das Reduktionsmittel. Das Reduktionsmittel ist bei Raumtemperaturen chemisch beständig und zeigt seine Reduktionseigenschaften nur bei einer erhöhten Temperatur (300 - 310° C).

Als poröse Träger für den Katalysator können nach dem Verfahren gemäß der Erfindung Keramikstäbe aus $\gamma$-$Al_2O_3$ mit einer spezifischen Oberfläche von 100 - 150 $m^2$/g und Platten aus porösem Titan mit einer spezifischen Oberfläche von 0,05 - 0,5 $m^2$/g eingesetzt werden. Beim porösen Titan ist keine Hydrophobierung des Katalysators erforderlich, da die Sorption der die Anfangscharakterisiken des Katalysators beeinträchtigenden Feuchte bei einer solchen kleinen Innenfläche unbedeutend ist.

Die Träger sind hydrophil. Während ihrer Durchtränkung mit der Tränklösung mit den beiden Reagenzien (Platin-Chlorwasserstoffsäure und Hydroxiäthyl- Alkylphenol) füllt die Tränklösung gleichmäßig die Poren des Trägers aus. Hier wird bei einer Temperatursteigerung das disperse Platin gebildet und in den gleichen Poren sorbiert.

Obwohl gleichzeitig ein Reduktionsmittel (Hydroxiäthyl- Alkylphenol) und ein Oxydans (Platin-Chlorwasserstoffsäure) vorhanden sind, ist die Tränklösung im Laufe von vielen Monaten chemisch stabil.

Die Anwendung einer solchen Tränklösung verkürzt wesentlich die Katalysatorzubereitungszeiten: Die Sorption der Tränklösung im porösen Träger bedarf max. 1 Minute, und das nachfolgende Verbacken nimmt max. 10 Minuten in Anspruch. Die Gesamtdauer bei der Zubereitung des Katalysators beträgt somit 15 Minuten.

Alle Vorbereitungsabläufe zur Herstellung des Katalysators (Zubereitung der Tränklösung, Ofenfeuerung usw.) sind den aus dem Stand der Technik bekannten Vorgängen ähnlich und werden einmal am Anfang des Arbeitsvorgangs abgefertigt.

Die Konzentration (C, Mol/Liter) der Platin-Chlorwasserstoffsäure in der Tränklösung wird nach der Formel C = 5,126·(m/v) pro geometrische (sichtbare) Oberflächeneinheit des Katalysatorträgers berechnet, und zwar aufgrund des spezifischen Porenumfangs (v, $cm^3/cm^2$) und des vorgegebenen spezifischen Platinanteils (m, $g/cm^2$).

Die unten angeführten Beispiele enthalten die Beschreibung der Katalysatorzubereitung mit zwei verschiedenen Trägern: Stäbe aus Aluminiumoxid ($\gamma$-$Al_2O_3$, Stabdurchmesser 6 mm, Stablänge 60 mm und Längskanal 1,5 mm) und Platten aus porösem Titan (Abmessungen 45 x 45 mm und Stärke 0,5 mm). Es sind auch die Prüfungsergebnisse dieser Katalysatoren dargelegt. Das Gestell sowie die Elemente für die weiteren verfahrenstechnischen Abläufe zur Katalysatorherstellung sind detailliert in dem oben genannten Stand der Technik beschrieben.

Der 86 L große Prüfraum wurde mit allen erforderlichen Gasversorgungslinien und Rotametern für die Zusammensetzung und Zuführung der Wasserstoff-Luft-Mischung ausgestattet. Er war auch mit Lüftern zur Homogenisierung des Prüfraummediums in Bezug auf Zusammensetzung und Temperatur (25° C), mit Druck-, Temperatur- und Feuchtegebern sowie mit Wasserstoffkonzentrationsmessgebern ausgerüstet. Für die Prüfungen wurde eine Kassette mit Katalysator im unteren Teil der Rekombinationsanlage angeordnet. Während der Katalysatorprüfungen wurde die Rekombinationsanlage mit der Kassette in die Mitte des Prüfraums gesetzt. Die Wasserstoff-Luft-Mischung mit Strömungen von $I_H$ und $I_{Luft}$ wurde dem Prüfraum mit Hilfe einer Gasdruckregelvorrichtung und eines Wasserstoff-Luftmischers mit bestimmter konstanter Geschwindigkeit zugeleitet. Über die Herstellung des stabilen Systemzustands wurden nach den mit der Zeit gleichbleibenden (zeitinvariablen) Wasserstoffkonzentrationen im Prüfraum die Temperatur des Arbeitskatalysators, die Feuchte, die Gastemperatur am Austritt der Rekombinationsanlage und die Gastemperatur im Prüfraum gemessen. Der Luftstrom wurde immer konstant aufrechterhalten. Dabei wurde die Wasserstoffkonzentration in der einströmenden Gasmischung geändert, und die kinetischen Kenndaten des stationären Prozesses wurden wieder erfasst.

Die Aktivität des hergestellten Katalysators wurde anhand der spezifischen Geschwindigkeit i, ml/Min.·$cm^2$ der

Wasserstoffrekombination ausgewertet. Die spezifische Geschwindigkeit der Wasserstoffrekombination wurde nach folgender Formel ermittelt:

$$i = \frac{I_H - I_{Luft} / [(100/C_{stat.}) - 1]}{\{1 - 0{,}5 / [(100/C_{stat.}) - 1]\} S},$$

wobei

$I_H$, l/Min. - die Geschwindigkeit der Wasserstoffströmung,
$I_{Luft}$, l/Min. - die Geschwindigkeit der Luftströmung,
$C_{stat.}$, % Vol. - die Wasserstoffkonzentration im Prüfraum und
S, $cm^2$ - die obere Querschnittsfläche des Prüfraums sind.

Außerdem wurde die Aktivität des hergestellten Katalysators anhand des ($i_s$) - Kennwerts ausgewertet. $i_s$ ist die spezifische Geschwindigkeit, genormt pro eine $C_{stat.}$-Einheit, d. h. um 1 % Vol. Der letzte Parameter ermöglicht es, die katalytische Aktivität verschiedener Katalysatoren zu vergleichen.

Beispiel 1

Der Katalysator auf dem Träger in Form von $\gamma$-$Al_2O_3$-Stäben wurde unter Anwendung einer Tränklösung zubereitet. Die Tränklösung enthielt 0,5% Hydroxiäthyl- Alkylphenol + 0,037 m/l Platin-Chlorwasserstoffsäure. Die Stäbe wurden 40 Sekunden lang in die Tränklösung eingetaucht und dann 10 Minuten lang bei 310° C verbacken. Um dem Katalysator wasserabweisende Eigenschaften zu verleihen, wurde eine Hydrophobierung der Stäbe vorgenommen. Dafür wurden die Stäbe 10 Sekunden lang in die hydrophobierende Lösung der Aufschwemmung von Fluoroplast -4 Marke F-4D (Ф-4Д , TU 6-05-1246-81) mit 15% Fluoroplastgehalt versenkt und danach im Laufe von 10 Minuten bei 310° C verbacken. Nach dem Zusammenbau der Stäbe in der Kassette der Rekombinationsanlage (drei Ebenen ä 17 Stäbe pro Ebene) wurden die Prüfungen des Katalysators durchgeführt. Die katalytische Aktivität des Katalysators wurde anhand der i- und $i_c$-Kenndaten eingeschätzt (s. Tabelle 1).

Tabelle 1

| Aktivitätskenndaten | $C_{stat.}$, Vol.% | | | | |
|---|---|---|---|---|---|
| | 1,5 | 2,9 | 4,9 | 6,7 | 8,4 |
| i, ml/(Min.·$cm^2$) | 28 | 58 | 114 | 155 | 197 |
| ic, ml/(Min.·$cm^2$ %) | 10,6 | 12,2 | 10,9 | 10,2 | 9,7 |

Beispiel 2

Der Katalysator aus porösem Titan in Form von Quadratplatten (mit Abmessungen 45 x 45 mm und Stärke 0,8 mm) wurde unter Anwendung der Tränklösung zubereitet. Die Tränklösung enthielt 0,5% Hydroxiäthyl-Alkylphenol + 0,015 m/l Platin-Chlorwasserstoffsäure. Die Platten wurden 10 Sekunden lang in die Tränklösung versenkt und danach im Laufe von 10 Minuten bei 310° C geglüht. Nach dem Zusammenbau der Platten in der Kassette (zwei Ebenen ä 4 Platten) wurde der Katalysator getestet. Die katalytische Aktivität des Katalysators wurde anhand der i- und $i_c$-Kenndaten eingeschätzt (s. Tabelle 2).

Tabelle 2

| Aktivitätskenndaten | Stationäre Wasserstoffkonzentration im Prüfraum, Vol.% | | | | |
|---|---|---|---|---|---|
| | 1,34 | 2,41 | 3,93 | 6,92 | 8,11 |
| Spezifische Leistung, i, ml/(Min.·$cm^2$) | 29,9 | 64,7 | 127,1 | 218,5 | 285,3 |

(fortgesetzt)

| Aktivitätskenndaten | Stationäre Wasserstoffkonzentration im Prüfraum, Vol. % | | | | |
|---|---|---|---|---|---|
| | 1,34 | 2,41 | 3,93 | 6,92 | 8,11 |
| $i_c$, ml/(Min.-cm$^2$ %) | 22,3 | 26,9 | 32,3 | 31,5 | 35,2 |

Der Vergleich der Tabellenangaben ergibt, dass der $i_c$- Kennwert für einen Katalysator mit einem porösen Titanträger um das 2- bis 3-fache größer ist als der Wert für einen Katalysator mit einem Aluminiumoxidträger. Das heißt, der Träger aus porösem Titan ist für das vorgeschlagene Verfahren mit einem beschleunigten Prozessablauf zur Zubereitung eines Katalysators mehr geeignet, da dieser Träger die Herstellung eines Katalysators mit einer höheren katalytischen Aktivität sicherstellt. Darüber hinaus bedarf der Katalysator auf einem porösen Titanträger keiner Hydrophobierung im Gegensatz zu einem Katalysator mit einem Aluminiumoxidträger.

**Patentansprüche**

**1.** Verfahren mit einem beschleunigten Prozessablauf zur Zubereitung eines Katalysators für eine Rekombination von Wasserstoff und Sauerstoff in geschlossenen Räumen, wobei ein poröser Träger des Katalysators mit einer Salzlösung eines katalytisch aktiven Metalls und einem flüssigen chemischen Reduktionsmittel durchtränkt und dann nach einer Abtrocknung bis zur Reduktion des katalytisch aktiven Metalls im dispersen Zustand verbacken wird,
**dadurch gekennzeichnet,**
**dass** als chemisches Reduktionsmittel Hydroxiäthyl-Alkylphenol mit folgendem Gefüge und n angeschlossenen Molen von Epoxiäthan $C_2H_4O$ mit n = 1...10 verwendet wird, welches unmittelbar der Salzlösung des katalytisch aktiven Metalls zugegeben wird.

**2.** Verfahren nach Anspruch 1,
**dadurch gekennzeichnet,**
**dass** als Salz des katalytisch aktiven Metalls Platin-Chlorwasserstoffsäure (chloroplatinic acid) und als chemisches Reduktionsmittel Hydroxiäthyl- Isooktylphenol mit einem dementsprechenden n = 7 eingesetzt werden.

**3.** Verfahren nach Anspruch 1 oder 2,
**dadurch gekennzeichnet,**
**dass** die Konzentration C des Salzes des katalytisch aktiven Metalls in der Lösung zur Durchtränkung des Katalysatorträgers aufgrund des Verhältnisses $C = 5{,}12 \cdot (m/v)$ festgelegt wird, wobei m der vorgegebene Anteil des katalytisch aktiven Metalls pro Flächeneinheit der geometrischen Trägeroberfläche und v der Porenumfang im Träger pro Flächeneinheit der geometrischen Trägeroberfläche sind.

**4.** Verfahren nach Anspruch 1 oder 2,
**dadurch gekennzeichnet,**
**dass** als poröse Träger für den Katalysator solche Metalle gewählt werden, die nach dem Verfahren der Sintermetallurgie hergestellt werden und eine spezifische Oberfläche von 0,05...1,5 $m^2/g$ aufweisen.

**5.** Verfahren nach Anspruch 3,
**dadurch gekennzeichnet,**
**dass** als poröse Träger für den Katalysator solche Metalle gewählt werden, die nach dem Verfahren der Sintermetallurgie hergestellt werden und eine spezifische Oberfläche von 0,05...1,5 $m^2/g$ aufweisen.

**6.** Verfahren nach Anspruch 1 oder 2,
**dadurch gekennzeichnet,**
**dass** der Katalysator nach dem Verbacken mittels eines der bekannten Verfahren hydrophobiert wird.

**7.** Verfahren nach Anspruch 3,
**dadurch gekennzeichnet,**
**dass** der Katalysator nach dem Verbacken mittels eines der bekannten Verfahren hydrophobiert wird.

**8.** Verfahren nach Anspruch 4,
**dadurch gekennzeichnet,**

**dass** der Katalysator nach dem Verbacken mittels eines der bekannten Verfahren hydrophobiert wird.

**9.** Verfahren nach Anspruch 5,
**dadurch gekennzeichnet,**
**dass** der Katalysator nach dem Verbacken mittels eines der bekannten Verfahren hydrophobiert wird.

Europäisches Patentamt
European Patent Office
Office européen des brevets

# EUROPÄISCHER RECHERCHENBERICHT

Nummer der Anmeldung
EP 11 00 5067

## EINSCHLÄGIGE DOKUMENTE

| Kategorie | Kennzeichnung des Dokuments mit Angabe, soweit erforderlich, der maßgeblichen Teile | Betrifft Anspruch | KLASSIFIKATION DER ANMELDUNG (IPC) |
|---|---|---|---|
| X,D | RU 2 361 663 C1 (KOSHMANOV DMITRIJ EVGEN EVICH [RU]; SHEPELIN VLADIMIR ANDREEVICH [RU]) 20. Juli 2009 (2009-07-20)<br>* Seite 2, Absätze 1, 3, 5, 7-9, 12 *<br>* Seite 2, Absatz 15 - Seite 3, Absatz 1 *<br>* Beispiel 1 *<br>* Ansprüche 1-3 *<br>----- | 1-9 | INV.<br>B01J23/42<br>B01J31/02 |

RECHERCHIERTE SACHGEBIETE (IPC)
B01J
G21C

Der vorliegende Recherchenbericht wurde für alle Patentansprüche erstellt

2

| Recherchenort | Abschlußdatum der Recherche | Prüfer |
|---|---|---|
| München | 17. Februar 2012 | Kyriopoulos, Aliki |

KATEGORIE DER GENANNTEN DOKUMENTE

X : von besonderer Bedeutung allein betrachtet
Y : von besonderer Bedeutung in Verbindung mit einer anderen Veröffentlichung derselben Kategorie
A : technologischer Hintergrund
O : nichtschriftliche Offenbarung
P : Zwischenliteratur

T : der Erfindung zugrunde liegende Theorien oder Grundsätze
E : älteres Patentdokument, das jedoch erst am oder nach dem Anmeldedatum veröffentlicht worden ist
D : in der Anmeldung angeführtes Dokument
L : aus anderen Gründen angeführtes Dokument
& : Mitglied der gleichen Patentfamilie, übereinstimmendes Dokument

EPO FORM 1503 03.82 (P04C03)

## ANHANG ZUM EUROPÄISCHEN RECHERCHENBERICHT ÜBER DIE EUROPÄISCHE PATENTANMELDUNG NR. EP 11 00 5067

In diesem Anhang sind die Mitglieder der Patentfamilien der im obengenannten europäischen Recherchenbericht angeführten Patentdokumente angegeben.
Die Angaben über die Familienmitglieder entsprechen dem Stand der Datei des Europäischen Patentamts am
Diese Angaben dienen nur zur Unterrichtung und erfolgen ohne Gewähr.

17-02-2012

| Im Recherchenbericht angeführtes Patentdokument | Datum der Veröffentlichung | Mitglied(er) der Patentfamilie | Datum der Veröffentlichung |
|---|---|---|---|
| RU 2361663 C1 | 20-07-2009 | KEINE | |

EPO FORM P0461

Für nähere Einzelheiten zu diesem Anhang : siehe Amtsblatt des Europäischen Patentamts, Nr.12/82